# EUROPEAN PATENT APPLICATION

(11) **EP 2 377 632 A2**
(43) Date of publication of application: **19.10.2011**
(21) Application number: 11161351.9
(22) Date of filing: 06.04.2011
(51) Int. Cl.: B22F 9/04

(54) **Method of producing a powder**

(30) Priority: 19.04.2010 GB 1006424
(71) Applicant: Rolls-Royce plc, London SW1E 6AT (GB)
(72) Inventor: Voice, Wayne Eric, Nottingham, Nottinghamshire NG2 5JB (GB)
(74) Representative: Tindall, Adam

(57) **Abstract**

A powder and/or polyhedral grains of a solid material are produced by directing one or more jets of liquid at a body of the solid material, thereby causing the ablation of powder particles from the solid material. The jet or jets of liquid may be controlled to cut polyhedral grains from the solid material. The liquid within which the powder particles and/or grains are entrained is then collected and the powder particles and/or grains are separated from the liquid.

## Description

The present invention relates to a method and apparatus for producing a powder, and particularly, although not exclusively, a titanium-based powder.

Two main methods are currently used for commercially producing metal powders, namely gas atomisation and the plasma rotating electrode process (PREP). Both these methods produce powders having a wide particle size distribution; usually up to hundreds of microns. However, only a relatively small proportion of the particles are in the narrow size band suitable for use in metal injection moulding (MIM) processes. Consequently, particles of the desired size have to be separated from the remainder which is often re-melted and re-processed.

Re-melting and re-processing may be suitable for nickel-based and steel-based powders. However, if re-melted and re-processed powder is used to produce titanium-based and other reactive metal powders, high levels of undesirable contaminants such as oxygen are introduced.

A further method known as hydride de-hydride (HDH) may be used to produce titanium-based powders. Hydrogen is dissolved into the titanium or the titanium alloy by heating it in a hydrogen atmosphere which causes it to become brittle. The titanium is then mechanically crushed and heated in a vacuum to extract the hydrogen. The powder particles produced are irregularly shaped which means that the powder has poor flow characteristics.

Accordingly, it is both difficult and expensive to produce metal powders, in particular titanium-based and other reactive metal powders, which are suitable for manufacturing techniques such as metal injection moulding.

It is therefore desirable to provide an inexpensive method for producing metal powders.

There is provided a method of producing a powder, comprising: directing a jet of liquid at a body of a solid material, thereby causing the ablation of powder particles from the solid material; collecting the liquid within which the powder particles are entrained; and separating the powder particles from the liquid.

According to a first aspect of the present invention there is provided a method of producing a powder comprising polyhedral grains of a solid material, the method comprising: directing a jet of liquid at a body of the solid material, the jet being oriented (or directed) so as to cut the polyhedral grains from the solid material; collecting the liquid and the polyhedral grains; and separating the polyhedral grains from the liquid.

The method may further comprise the steps of directing a jet of liquid at a body of the solid material, the jet being oriented so as to cut the polyhedral grains from the solid material by causing the ablation of further powder particles from the solid material; collecting the liquid within which the polyhedral grains and the powder particles are entrained; and separating out the powder particles, the polyhedral grains and the liquid.

The liquid of the jet may be water.

The separation may be carried out by a centrifuge or by settlement. The liquid and powder particles and/or polyhedral grains may be collected in a liquid bath. The liquid bath may be a water bath.

The solid material may be a metal. The metal may be titanium or a titanium alloy, or an intermetallic such as gamma titanium aluminide or a ceramic material.

The method may further comprise pre-treating the solid material body to increase the brittleness of the material. The brittleness of the solid material may be increased by heating and subsequent quenching. Alternatively or additionally, the brittleness of the solid material may be increased by doping with an interstitial element such as hydrogen. The method may further comprise removing the dopant from the powder particles and/or the polyhedral grains.

There is also provided an apparatus for producing a powder from a solid material, comprising: a nozzle arranged to direct a jet of liquid at a body of the solid material, thereby causing the ablation of powder particles from the solid material; a collector arranged to collect the liquid within which the powder particles are entrained; and a separator arranged to separate the powder particles from the liquid.

The present invention further relates to an apparatus for producing a powder comprising polyhedral grains of a solid material, comprising: at least one nozzle arranged to direct jets of liquid at a body of the solid material, the jets being oriented so as to cut polyhedral grains from the solid material; a collector arranged to collect the liquid and the polyhedral grains; and a separator arranged to separate the polyhedral grains from the liquid.

The at least one nozzle may be arranged to direct jets of liquid at a body of the solid material, the jets being oriented so as to cut polyhedral grains from the solid material by causing the ablation of further powder particles from the solid material; the collector being arranged to collect the liquid within which the polyhedral grains and the powder particles are entrained; and the separator arranged to separate out the powder particles, the polyhedral grains and the liquid.

The separator may be a centrifugal separator or a settlement tank.

The collector may comprise a liquid bath. The liquid bath may be a water bath.

The invention may comprise any combination of the features and/or limitations referred to herein, except combinations of such features as are mutually exclusive.

Embodiments of the present invention will now be described, by way of example only, with reference to the accompanying drawings, in which:
Figure 1 schematically shows an apparatus for producing a powder from a solid target material;
Figures 2 and 3 schematically shows polyhedral grains being cut from a target solid material; and
Figure 4 schematically shows a cellular structure formed from a powder and polyhedral grains.

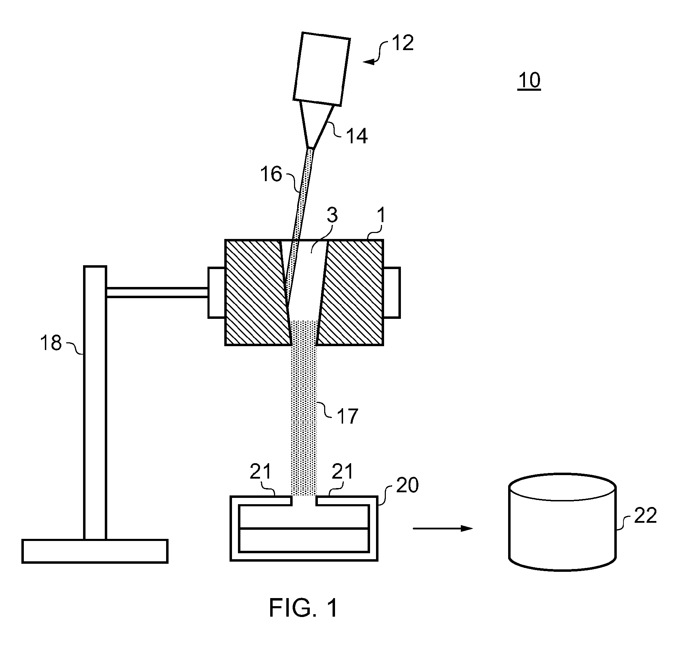

Figure 1 shows an apparatus 10 for producing a fine powder from a solid target material 1 in accordance with a first embodiment of the invention. The apparatus 10 comprises a water-jet cutting machine 12 having a nozzle 14 for ejecting a high-pressure jet of water 16, a jig 18 for holding a solid body 1 of the target material, a collector in the form of a water bath 20 and a centrifugal separator 22.

The apparatus 10 may be used to produce a fine titanium or titanium alloy powder from a solid piece of titanium/titanium alloy. The target material may be pure titanium or a titanium alloy such as gamma titanium aluminide. The fine titanium-based powder produced can be used to manufacture components by metal injection moulding (MIM). This allows the cost-effective manufacture of titanium-based components.

The body 1 of titanium-based target material may be scrap or reclaimed material that has been cleaned. For example, scrap titanium may be cleaned in a bath of acid in order to remove any surface contaminants. Even if the body 1 is not scrap, it may be necessary to clean it in order to remove surface contaminants.

The method for manufacturing a fine titanium-based powder using the apparatus 10 is as follows. The body 1, which is a solid block, is held firmly by the jig 18. The high-pressure water-jet cutting machine 12 is operated in plain water-jet mode (i.e. the jet does not incorporate an abrasive) and the plain water jet 16 emitted by the nozzle 14 is directed at the target material 1. The water pressure may be above 20kpsi (~140MPa). Currently, water jet cutting machines are capable of achieving operating pressures of the order of 80kpsi (~550MPa) and accordingly the water-jet pressure may be between 20-80kpsi (~140MPA - ~550MPa). However, as capabilities increase, the water-jet pressure may be in excess of 80kpsi (~550MPa).

The water jet 16 is traversed over the surface of the body 1 and cuts a hole or slot 3 through the body 1. The water jet 16 causes the ablation of powder particles from the surface of the body 1. The ablated powder particles are broken or torn from the body 1 by the water jet 16. In this process the water jet 16 loses energy and becomes a water stream 17. Powder particles are typically broken off by faceted cracking if the material is brittle. Powder particles are typically torn away from a ductile material with deformation occurring on the created surface. The water stream 17 containing the ablated powder particles is collected in a water bath 20. The water bath 20 stops the water stream 17 and is provided with covers 21 to prevent contamination of the contents of the water bath 20.

The powder particles collected in the water bath 20 are subsequently separated from the water using a suitable separation technique. In this embodiment, the water containing the powder particles is transferred to a centrifugal separator 22 which separates the titanium-based powder particles from the water. As will be readily apparent to one skilled in the art, other suitable separation techniques may be used. For example, the powder particles may be separated using settlement under gravity. Also, separation may take place in the water bath in which the particles are collected.

The above method is capable of producing a titanium-based powder having a high percentage of particles falling within a narrow band of particle sizes. As an example, the particle size distribution of the powder may be a normal distribution having a mean of about 30µm and a standard deviation of about 15µm. The size of the particles may be measured using commercial instruments based on lasers.

The particle size distribution of the powder produced by the above method can be controlled by altering a number of variables. These include, but are not limited to, the target material, the pressure of the water jet, the traverse speed of the water jet, the impingement angle of the water jet on the target material, the stand-off distance between the nozzle and the target material and the nozzle diameter.

In one example, using a target material of gamma titanium aluminide, a powder having a particle size distribution of between about 20 and 100µm can be produced by using a plain water jet pressure of 50kpsi (~345MPa), a traverse speed of 500mm/min, perpendicular impingement, a stand-off distance of 3mm, an orifice diameter of 0.4mm and a nozzle diameter of 1 mm.

A titanium-based powder having an average particle size of around 10-20µm can be produced by using a water jet pressure of between 30-60kpsi (~205MPa - ~410MPa), a nozzle diameter of 1 mm and a stand-off distance of between 2-5mm.

This method is typically more suitable for producing a powder from a brittle material. It may therefore be desirable to increase the brittleness of the target material before ablating it with a liquid jet.

The brittleness of the target material may be adjusted by heat treatment. For example, the brittleness of the target material can be increased by heating it to a high temperature and then subsequently quenching it.

The brittleness of the target material may also be increased by doping it with an interstitial element that can subsequently be removed. Hydrogen or helium may be diffused into the target material and then subsequently removed from the powder. As an example, a target material of titanium can be doped with hydrogen by heating it in a hydrogen atmosphere at around 200-300°C. This causes large amounts of hydrogen to be diffused into the titanium (for example, about 1 %) which causes the titanium target material to become brittle and crack. This makes it easier to ablate the titanium target material with a jet of liquid. After the titanium powder particles have been separated from the water using the separator 22, the hydrogen can be removed from the titanium powder by heating the powder to above 700°C in a vacuum furnace.

The powder produced is relatively free of contaminants such as oxygen as it has not been processed at high-temperatures. The method also produces a powder having particles that are of a substantially regular shape. This improves the flow characteristics of the powder, so enhancing the behaviour of the powder when used in a metal injection moulding process. The titanium-based powder produced by the above method is therefore highly suitable for use in a metal injection moulding process which can be used to produce small, high-strength and lightweight components having a good surface finish. The components produced may be aerospace components or consumer components such as dental implants.

The method is both quick and relatively inexpensive. The method uses established mechanical equipment such as a high-pressure water-jet cutting machine and a centrifugal separator or settlement tank.

As will be readily apparent to one skilled in the art, the powder may be used in other applications such as direct laser deposition and thermal spraying to produce a surface coating.

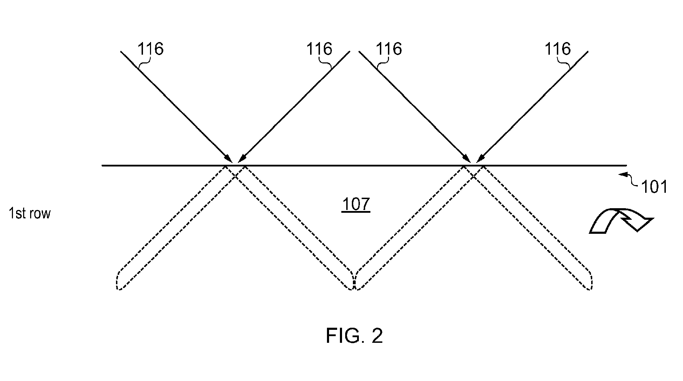

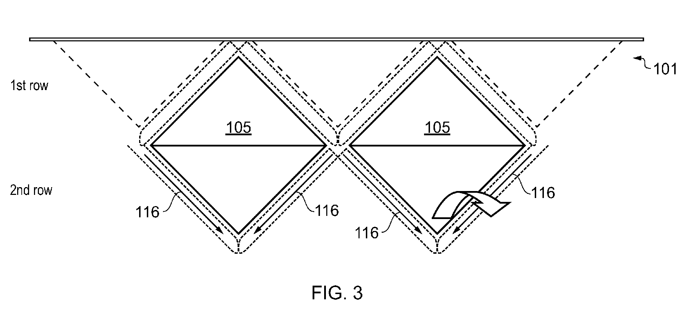

With reference to Figures 2 and 3, in a second embodiment a fine powder and a coarse powder are produced from a solid body 101. The apparatus is essentially the same as the apparatus of Figure 1 except there is a plurality of water jets 116. The water jets 116 may be produced by separate water jet cutting machines or may be produced by a single water jet cutting machine having a plurality of nozzles. Alternatively, the effect of the jets can be achieved by a single jet which is traversed over a predetermined travel path with appropriate changes in orientation. Alternatively, the effect of the jets can be achieved by a single water jet cutting machine having a single nozzle which is traversed over a predetermined travel path with appropriate changes in orientation.

The apparatus can be used to produce a relatively fine titanium-based powder comprising fine powder particles, and a relatively coarse titanium-based powder comprising larger polyhedral grains. As for the first embodiment of Figure 1, the target material may be pure titanium or a titanium alloy such as gamma titanium aluminide. The fine titanium-based powder produced can be used to produce components by metal injection moulding (MIM). This allows titanium-based components to be manufactured cost effectively.

The water jets 116 are directed towards the body 101 so as to cut polyhedral grains from the body 101 and to cause the ablation of fine powder particles from the body 101. In this embodiment a plurality of octahedral grains 105 are cut from the body 101. As will be readily apparent to one skilled in the art, any other polyhedron can be cut from the body 101 by appropriate positioning of the water jets 116.

With reference to Figure 2, a first (or initial) row of coarse grains is cut from the surface of the target body 101. The grains 107 of the first row are square pyramids. Each of these grains 107 is cut using four water jets 116 which traverse the surface of the grains 107. After the first row of grains 107 has been cut from the body 101, the grains are washed-off and collected. With reference to Figure 3, after the first row has been cut, a second row of coarse grains 105 is cut using the water jets 116. The grains 105 of the second row are octahedrons. Each grain 105 of the second row is cut using four water jets 116. After the second row of grains 105 has been cut from the body 101, the grains are washed-off and collected. The grains 105 may be between 1-2mm across. Subsequent rows (or layers) of coarse octahedral grains 105 can be cut from the body 101 after the second row has been removed. The layers of coarse octahedral grains 105 are cut and removed layer-by-layer.

As the coarse grains 105 are cut from the body 101, fine powder particles are also ablated from the body 101 by the water jets 116. The ablated powder particles are broken or torn from the body 101 by the water jets 116. The fine powder particles, the coarse polyhedral grains 105 and the water from the water jets 116 are collected in a similar manner as in the first embodiment. The fine powder particles, the coarse polyhedral grains 104 and the water are separated from one another using a separation technique. The separation technique may be centrifugal separation or settlement, for example. The separation results in a fine titanium-based powder comprising the fine powder particles and a coarse titanium-based powder comprising the coarse polyhedral grains.

The delivery pressure of the liquid jet may be chosen from a range which essentially "defocuses" the jet to thereby cause the jet to break down towards its outer periphery. This may be achieved by delivering liquid at a pressure which is lower than during a conventional equivalent liquid jet cutting operation. Using such a technique will result in the production of particles with more rounded corners/edges than would otherwise be produced. This is advantageous for some powder uses. For example, powder particles with more rounded corners are easier to compact.

As for the first embodiment, the target material may be scrap or reclaimed material and may be cleaned prior to cutting/ablation. Further, the target material may be pretreated to increase its brittleness.

The fine powder produced in accordance with the method of the second embodiment is particularly suitable for metal injection moulding and is similar to the powder produced by the method of the first embodiment. In other words it is a particularly fine powder having a high percentage of fine particles.

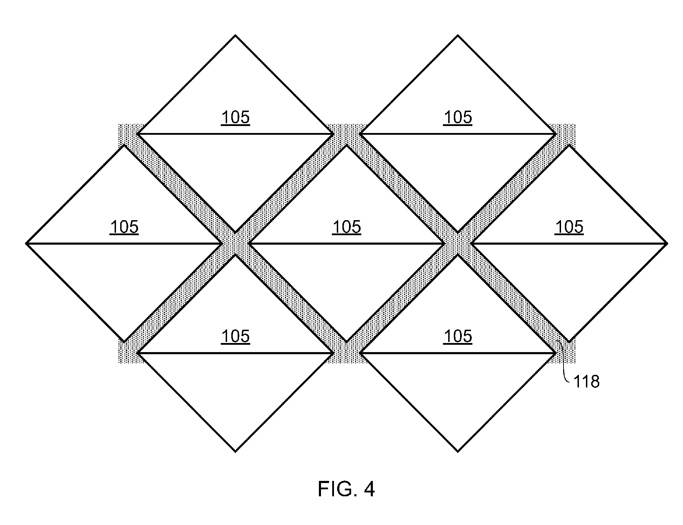

The coarse powder comprising the cut polyhedral grains may be used to manufacture components by hot isostatic pressing. As shown in Figure 4, a material having a cellular structure may be produced by combining the coarse powder comprising the cut grains 105 with a fine powder 1118 formed by ablation of a solid material as described above, and processing the combined powder by hot isostatic pressing. The coarse powder and fine powder may be produced from the same target material, or they may be produced from different target materials.

Although it has been described that the above methods are for producing a metal powder, in particular a titanium-based powder, the method may be used for producing powders or granular materials from other metals or from non-metallic materials such as ceramics.

For the avoidance of doubt, in the foregoing description the term "ablated" means the removal of particles of material from the surface of the target material.

## Claims

1. A method of producing a powder comprising polyhedral grains of a solid material, the method comprising:
directing jets of liquid at a body of the solid material, the jets being oriented so as to cut the polyhedral grains from the solid material;
collecting the liquid and the polyhedral grains; and
separating the polyhedral grains from the liquid.

2. A method as claimed in claim 1, further comprising the steps of
orientating the jets so as to cut the polyhedral grains from the solid material by causing the ablation of further powder particles from the solid material;
collecting the liquid within which the polyhedral grains and the powder particles are entrained; and
separating out the powder particles, the polyhedral grains and the liquid.

3. A method according to claim 1 or claim 2, wherein the separation is carried out by a centrifuge or by gravitational settlement.

4. A method according to any preceding claim, wherein the liquid and powder particles and/or polyhedral grains are collected in a liquid bath.

5. A method according to claim 4, wherein the liquid bath is a water bath.

6. A method according to any preceding claim, wherein the solid material is a metal.

7. A method according to claim 6, wherein the metal is titanium or a titanium alloy.

8. A method according to any preceding claim, further comprising pre-treating the solid material body to increase the brittleness of the material.

9. A method according to claim 8, wherein the brittleness of the solid material is increased by heating and subsequent quenching.

10. A method according to claim 8, wherein the brittleness of the solid material is increased by doping with an interstitial element, the method further comprising removing the dopant from the powder particles and/or the polyhedral grains.

11. An apparatus for producing a powder comprising polyhedral grains of a solid material, comprising:
at least one nozzle arranged to direct jets of liquid at a body of the solid material, the jets being oriented so as to cut polyhedral grains from the solid material;
a collector arranged to collect the liquid and the polyhedral grains; and
a separator arranged to separate the polyhedral grains from the liquid.

12. An apparatus as claimed in claim 11 wherein :
the jets are oriented so as to cut polyhedral grains from the solid material by causing the ablation of further powder particles from the solid material;
the collector is arranged to collect the liquid within which the polyhedral grains and the powder particles are entrained; and
the separator arranged to separate out the powder particles, the polyhedral grains and the liquid.

13. An apparatus according to claim 11 or 12, wherein the separator is a centrifugal separator or a settlement tank.

14. An apparatus according to any of claims 11 to 13, wherein collector comprises a liquid bath.

15. An apparatus according to claim 14, wherein the liquid bath is a water bath.
